# EUROPEAN PATENT APPLICATION

(11) **EP 4 521 581 A1**
(43) Date of publication of application: **12.03.2025**
(21) Application number: 23382902.7
(22) Date of filing: 06.09.2023
(51) Int. Cl.: H02J 3/14

(54) **A METHOD AND A SYSTEM FOR DYNAMIC OPERATION OF DISTRIBUTION POWER GRIDS**

(71) Applicant: Plexigrid SL, 33204 Gijón, Asturias (ES)
(72) Inventor: Arboleya Arboleya, Pablo, Gijón, Asturias (ES); Méndez-Rebollo, Alberto, Gijón, Asturias (ES)
(74) Representative: Pons

(57) **Abstract**

A method and a system for dynamic operation of distribution power grids comprising a plurality of flexible devices, the method comprising the steps of obtaining data from sensors deployed in the flexible devices and the power grid; initializing and building digital twins using an scenario with low-adverse operating conditions, determining control variables and setting pre-defined constraints; solving digital twins; determining if a violation of the constraints occurs, if not: generating a new more adverse scenario by modifying the control variables, using a scenario generator module; and repeating the previous steps; if a violation occurs, determining that the previous scenario is a viable scenario for a next period of time; determining a plurality of viable scenarios, varying multiple control variables; and applying at least one of the viable scenarios. Also, the method could define a high-adverse scenario and reduce the adversity to find the viable scenarios.

## Description

### OBJECT OF THE INVENTION

The present invention relates to distribution power grids, particularly, to a control method for the dynamic operation of the power grids.

Thus, it is an object of the invention a method for dynamic operation of distribution power grids that allows to maximize the number of flexible devices that can be deployed in a distribution power grid and the amount of energy distributed (kWh) per unit of installed capacity (kW), by coordinating the flexible devices to achieve the highest possible utilization of capacity in the grid without compromising service quality or security of supply.

### BACKGROUND ART

Distribution networks are currently facing one of the greatest challenges since their deployment more than 100 years ago. This challenge consists of being able to accommodate all the new devices derived from the process of electrification of the energy sector. The process of electrification of the energy sector is key to its decarbonization but also to reduce energy dependence on fuels such as gas and oil derivatives. The electrification trend is currently unstoppable and this, at the level of low and medium voltage networks, translates into an increasing deployment of devices such as electric vehicle chargers, heat pumps, photovoltaic generation, energy accumulation devices, etc. And as the speed of deployment of these devices increases, so does the amount of bottlenecks and instability events in the electricity grids.

Grid bottlenecks are already the number 1 cause of delays and cancellations of renewable energy projects and electrification projects around the world.

The distribution network is the backbone of the electrification process as it is the nexus of all these devices. This type of device will undoubtedly require a strong grid capable of accommodating all the new demand and distributed generation. But the grid will also have to facilitate the implementation of new energy paradigms such as energy communities, or the so-called flexible consumers who will participate much more actively in the energy and electricity sector. The implementation of this type of energy paradigms as well as the empowerment of the final consumer is regulated in the "Clean Energy for all Europeans" package in general and in particular in one of its directives, Directive 944/2019.

However, the reality observed in electricity grids is that they are not ready to accommodate all the devices to be installed at a reasonable price. It must be taken into account that, until now, the philosophy used to deploy network capacity in the case of distribution networks (specially in low voltage) was the so-called "built and connect", i.e., as capacity deployment was needed, networks were built and expanded, usually with very high oversizing factors that in many cases exceeded 200% of the peak load. Distribution network operators dimension their networks for peaks that exist during very few hours a day, very few days a year. The fact of oversizing the system to cover these demand peaks means that on the one hand, the degree of utilization of network assets is extremely low (7% according to information generated by the Distribution System Operator Observatory of the European Commission), and on the other hand, the cost of the network becomes more expensive for the end user until it exceeds the cost of the energy itself, turning the distribution network into a stopper for the energy transition and the electrification process.

It should be borne in mind that the price of grid use has already exceeded the price of energy in several European countries and that, on the other hand, the International Energy Agency predicts in its report entitled "Net Zero by 2050: A Roadmap for the Global Energy Sector" that the increase in annual investment in grid capacity deployment will have to rise from the current $300 billion to more than $700 billion per year by 2030 to cope with all the changes required by the electrification process. On the other hand, the aforementioned European directive refers to the need to reduce the current DSO remuneration model in order to make them more efficient.

All the above arguments leave no other option than a paradigm shift in the distribution network deployment and operation model, moving from the "build and connect" model to the "connect and manage" model. In the latter case, the distributor must have management or operational tools that make it possible to visualize the network and make operating decisions in real time.

There are several works and patents that propose network operation methods, most of them aim at optimizing network operation costs using optimization algorithms. Other works propose the use of flexibility from the point of view of the distribution network operator, but in most cases the management of flexibility is approached in a very simplistic way by not considering the different agents involved or it is used pursuing objectives other than maximizing the network's capacity to host flexible resources.

As explained, in most cases, the operation of the network is aimed at a reduction of the operating cost or a reduction of losses. These objectives are legitimate, but they do not address the root of the problem, which is the disproportionate costs that final consumers pay for the use of the network due to the over-sizing that network operators need to ensure security of supply.

### DESCRIPTION OF THE INVENTION

The invention consists of a method for dynamic operation of distribution power grids comprising a plurality of flexible devices connected.

The method of the invention allows to operate the network to know its limits and to make all the flexible devices act in a coordinated and synchronized way to maintain the system in a safe operating point without the need to use high oversizing factors in the electrical infrastructure, leading to a material increase in utilization of capacity in the grid, i.e. the amount of energy distributed (kWh) per unit of grid capacity (kW).

For this purpose, the method is based on the generation of real time operation scenarios through the use of digital twins that allow knowing a priori how the network will behave in the event of certain actions. Once viable scenarios have been analyzed, variable controls of the network and the devices connected to it, could be set to one of said feasible scenarios.

In the context of the present invention, flexible devices are, for example, electric chargers and vehicles, heat pumps, photovoltaic generators, batteries, etc.

The method of the invention has a very specific application in the operation of distribution grids with problems arising from the high penetration of so-called flexible technologies such as electric vehicles, heat pumps, photovoltaic generation systems, etc. As an alternative to the excessive oversizing of network resources and the extra cost that this entails for the end consumer, the use of the method of the invention allows to maximize the number of flexible devices that can be deployed in a distribution network per capacity deployed.

The method of the invention allows to dynamically determine, by means of the use of digital twins, the operational limits of the distribution network at each point or zone of the same.

Then, for example, the operational limits of the distribution network could be published or executed directly or indirectly in said distribution network and/or in the devices connected to it.

In this way, at times of network saturation, which are estimated to be a few hours a day for a few days a year, the method of the invention reduces the harmful impact of the loads or flexible generators, allowing them to act freely during the rest of the time.

In this way, the method of the invention ensures the almost direct connection of flexible devices without the need for network impact studies. Currently, before allowing the connection of an electric vehicle, a photovoltaic panel or any other flexible load or generator, the distributor assesses what the impact will be and if any kind of problem is foreseen, the connection is not allowed until additional capacity is deployed, even if the probability of the problem occurring is very low and the problem can only occur during a very small number of hours per year. With this traditional methodology, the end-user is deprived completely of the use of an EV charger, heat pump, PV generator until the grid capacity deployment is executed. In this case, the method of the invention allows a flexible device to be installed directly without any calculation, as long as it complies with the dynamic limitations set by the method of the invention, i.e., is in a viable scenario.

The application of a viable scenario could be applied to the flexible device directly, through an aggregator or marketer, or through bilateral contracts or market mechanisms.

In this way, distributors can reduce network investments and, by reducing grid investments, the end consumer has access to the use of the grid at a much lower cost and more users can benefit from the use of said flexible devices. Aggregators and marketers can expand the fleet of devices they control as the network is not a constraint to that penetration, and for most of the time they can implement multiple business models that utilize the flexibility provided by the end consumer. Society at large benefits from an acceleration in the electrification process.

The method of the invention allows to maximize the number of devices deployed per unit of network capacity by using digital twins in a fully modular process that makes it adaptable to virtually any distribution network.

The method of the invention comprises a step of obtaining data from sensors deployed in the flexible devices and the power grid. Then, one or more digital twins for the flexible devices and the grid are initialized and built using the data obtained and applying an operating scenario with no-adverse or low-adverse operating conditions, also, control variables of the digital twins are determined, and pre-defined constraints are set.

Then, the digital twins are solved, and it is determined if a violation of the pre-defined constraints occurs:
○ if there is not any violation of the pre-defined constraints:
   ▪ a new operating scenario, more adverse than the previous operating scenario, is generated by modifying at least one of the control variables using a scenario generator module;
   ▪ the steps of solving digital twins and determining if a violation of the pre-defined constraints occurs are repeated;
○ if there is a violation of at least one of the pre-defined constraints: then, the previous operating scenario is determined as a viable scenario for a next period of time.

Repeating iteratively the steps explained before, a plurality of viable scenarios is determined, by varying one or more of the control variables of the digital twins. Then, at least one of said viable scenarios is applied.

The process can be run in reverse, going from a high-adverse to less adverse scenarios until the first scenario is found that manages to keep all electrical variables within the limits defined by the network pre-defined constraints. In said case, the method comprises the step of solving the digital twins and then it is determined if a violation of the pre-defined constraints occurs:
○ if there is a violation of the pre-defined constraints:
   ▪ a new operating scenario, less adverse than the previous operating scenario, is generated by modifying at least one of the control variables using a scenario generator module;
   ▪ the steps of solving digital twins and determining if a violation of the pre-defined constraints occurs are repeated; and
○ if there is not a violation of at least one of the pre-defined constraints: then, the previous operating scenario is determined as a viable scenario for a next period of time.

In the same way than the low-adverse realization, then the steps are iteratively repeated to determine a plurality of viable scenarios, by varying one or more of the control variables of the digital twins. Then, at least one of said viable scenarios is applied.

The scenario generation can take into account just technical considerations, but it can take other kind of considerations like hierarchy in the consumers considering different grid access tariffs or whatever other consideration that help to create the possible scenarios.

The method of the invention could be applied in real-time. Alternatively, the steps of obtaining data from sensors, initializing and building digital twins, solving digital twins, determining if a violation of the pre-defined constraints occurs and determining a plurality of viable scenarios could be applied for a future period, using predicted values for initializing and building digital twins. Then, the step of applying at least one of the viable scenarios could be performed in real-time or scheduled in the flexible devices.

Preferably, in the method of the invention, the step of applying at least one of the viable scenarios is performed by preparing a request for flexibility activation.

In the step of obtaining data from sensors deployed in the flexible devices and the power grid, the sensors could preferably comprise a GIS system, a SCADA system, an inventory system and a telemetering system, among others. Also, the sensors could comprise smart meters on the flexible devices and the power grid and "behind the meter" sensors.

The digital twins used in the method of the invention could be analytical type digital twins, aggregation of variables type digital twins, such as the sum of powers read by smart meters, or model-free type digital twins based on artificial intelligence, or a combination of them.

Also, the digital twins initialized and built could be single-point digital twins or multi-point digital twins.

The method of the invention could further comprise a step of determining operating contours by aggregating multiple viable scenarios determined.

Then, the viable scenarios or the operating contours could be published, and the method of the invention could also comprise a step of executing the viable scenarios or the operating contours by a flexibility activation.

The method of the invention could further comprise the steps of iteratively evaluating if the control variables are within pre-defined limits, and, if not, redefining constraints that control the scenario generator module in the step of generating a new operating scenario.

The method of the invention could further comprise a step of iteratively evaluating if the active users have been executed a network code involving the activation of flexibility.

The method of the invention could be set to run continuously or in response to specific events.

The invention also relates to a dynamic operation system for distribution power grids comprising:
- a distributor, connected to the power grid and configured to perform the steps of the method of the invention;
- a set of flexible devices connected to the distributor; and
- a plurality of sensors connected to the power grid and the flexible devices.

The advantages of this method and system are, among others:
- It allows flexible devices to be immediately deployed on the distribution grid without the need to check its available capacity, drastically reducing the waiting times of grid connection requests for new producers or consumers. Thus, the invention allows to resolve bottlenecks in a faster and more efficient way than the methods from the state of the art.
- It minimizes the necessary investment in grid capacity per kWh distributed by maximizing the number of flexible devices that the grid can support per unit of capacity deployed, thus avoiding the generation of cost overruns due to excessive oversizing of grid resources.
- It allows the coordination of millions of flexible devices with a very low computational cost, as it does not require a point-to-point connection that specifies the exact operating point of each device. In this way, the problem of device coordination is solved without the need to implement a very costly point-to-point communications system between the distributor and the millions of flexible devices that the distribution network can support.

- It enables distribution grid operators to offer their customers a wider range of value propositions and grid connection options, such e.g., "flexible grid tariffs", where consumers/prosumers get can opt for lower grid prices for their flexible devices in exchange for connecting them to the grid control center and allowing the grid operator to reschedule them in case of grid congestions.
- It allows both end consumers and aggregators or retailers to implement business models and execute them in a way that is fully compatible with the dynamic references established by the distributor, as the proposed methodology establishes operational limits within which the flexible devices can be operated with complete freedom. In this way, we can simultaneously use the flexibility of the devices to support the distribution network and to generate added value in other markets or business models that have nothing to do with the distributor. For example, the proposed system and method would make it possible to make support for the distribution network compatible with the purchase and sale of flexibility to provide frequency support to the transmission network or even with other business models such as peer-to-peer energy trading. This compatibility multiplies the value of the flexibility available in the grid.

### DESCRIPTION OF THE DRAWINGS

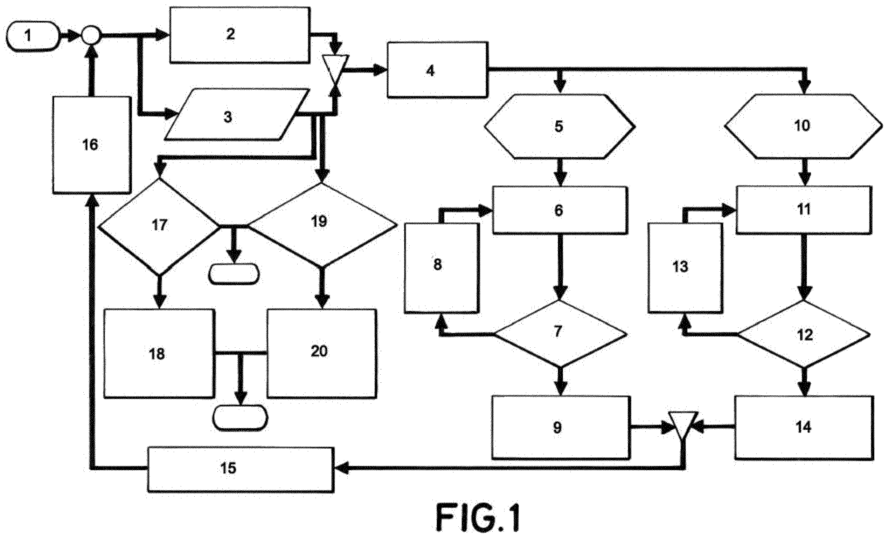

Figure 1 shows a block diagram of a preferred embodiment of the method of the invention.

### PREFERRED EMBODIMENTS OF THE INVENTION

The invention proposes a method for managing the operation of flexible devices in a distribution network together with network configuration assets to maximize the number of flexible devices that can be connected to the network while guaranteeing the quality of supply.

It is a method consisting of a series of processes and algorithms that could be implemented in a computer, cloud system or edge device and could be installed at distribution systems operator (DSO) level. The method of the invention allows to coordinate the flexible devices in real-time or in advance through the use of digital twins to make it possible to install the maximum number of devices without the need for investment in the deployment of new network capacity.

Thus, the proposed invention aims to address a growing problem in today's distribution networks. With increasing levels of penetration of flexible devices such as solar panels, electric vehicles, smart chargers, battery-based storage systems, heat pumps, etc., the distribution network is increasingly stressed and, in some cases, acts as a stopper to the massive deployment of these types of technologies, as it cannot accommodate the number of devices that demand connection to it. This happens because due to the low controllability that the distributor has over the network and assets, it needs to use huge oversizing factors.

The proposed invention makes it possible to reduce the oversizing factors by implementing a method for the dynamic operation of a power grid that allows to coordinate with all the aggregators and marketers in the area that manage flexible devices of the end users. This management is not done through the direct setting of specific operating points but through the determination of dynamic operational limits that establish for each area of the network or each device the bands of action of the flexible devices. All this is done through the use of digital network twins that allow the evaluation of possible scenarios for determining the dynamic limitations of the power grid. These limitations can be activated all the time or only activated at specific times when a problem is observed in the network, so that the rest of the time the flexible devices can operate without any limitation. In this way the operational system would act as a back-up, resolving specific problems and allowing the network to host a much larger number of devices without the need to make new investments in network infrastructure.

Once viable scenarios have been analyzed, the system will automatically prepare a request for flexibility activation which, depending on the case, can be carried out through market mechanisms, through bilateral agreements with prosumers, retailers, or aggregators, or through the publication of mandatory operating constraints.

The dynamic distribution network operation system is implemented in real time according to the method of the invention shown in Figure 1.

The system (1) starts by obtaining data from general data systems, from which the ADMS is also fed, and which typically comprise, among others, GIS system, SCADA system, inventory system, telemetering system, etc.

In this way, the system collects (2) information on the number, type, characteristics and location of flexible devices, as well as information from the sensors (3) deployed in the field, also called smart meters, and other sensors available to the distribution company that can provide useful information for the computation of a digital twin (4). The digital twin could be made more accurate by using also information from "behind the meter" sensors.

The information required to be collected depends largely on the type of digital twin used. Then, the system initializes and builds a digital twin from an extensive catalogue of available digital twins.

The digital twin used could be an analytical type digital twin, an aggregation of variables type digital twin, such as the sum of powers read by smart meters, or a model-free type digital twin based on artificial intelligence.

The selection of the digital twin depends on many factors such as the Advanced Measurement Infrastructure (AMI) deployed by the distribution network operator as well as the variable to be dynamically controlled. The AMI system deployed should be sufficient to provide the necessary input data to the digital twin and the selected digital twin should be able to reproduce the electrical variable(s) to be kept within the control range.

Generally speaking, digital twins could be classified as "single-point" if they reproduce one or more electrical variables at one point in the network. Multi-point twins reproduce one or several variables at several points in the network. The variables to be reproduced may be of the active, reactive, or apparent power, voltage or current type. According to this classification, a digital twin using a load flow technique to calculate voltages at the various points of a feeder would be a multi-point analytical digital twin reproducing voltage.

Once the digital twin is generated, a loop is executed which is responsible for determining the operating conditions in extreme scenarios. Figure 1 shows the generation of two dynamic network codes coinciding with two operating conditions although it could be extended to "n" different operating conditions.

Normally, as shown in Figure 1, two operating conditions are used that will coincide with scenarios of high-power injection by flexible devices or scenarios of high-power demand by flexible devices. Nevertheless, more paths of operating condition generation could be used or only one path would also be possible. For example, in the case of a system where there are only electric vehicles charging from the grid but no PV panels or vehicles discharging from the grid using vehicle to grid techniques, one could only consider an excess demand operation scenario and let the injection operate freely without any restrictions.

The number and type of digital twins and the operating scenarios to simulate could be variable. For example, operating conditions arising from one unique operating condition could be tested using two different digital twins that give rise to different constraints.

The method of the invention also comprises the step of initializing (5, 10) the digital twin or digital twins using the least adverse operating conditions. In an alternative embodiment, the digital twins could also be initialized in a highly adverse situation and the degree of adversity could be gradually reduced in successive steps until a viable scenario is found.

For example, in the previous case of electric vehicles, we could consider as least adverse conditions those in which active consumers with electric vehicles do not consume power from the grid. Also, we could start with the most adverse situation, which would be to consider that all vehicles consume the maximum power at which they can charge.

Then, the digital twin is solved (6, 11) and a step is carried out for determining whether there is a violation (7, 12) of the pre-defined constraints for the control variables.

Normally, in the least adverse scenario the defined constraints are not usually violated, so a new scenario is generated (8, 13) with a scenario generator module.

The scenario generator, which can be more or less complex, is configured to generate iteratively a more adverse scenario than the previous scenario. There are multiple strategies for increasing the adversity of the scenario. One possible solution could be, for example, a homogeneous increase in absolute value of the power consumed by the vehicles, for example, that all vehicles increase the consumption of the previous scenario by 1kW. If we start in the most adverse situation, the process would be the inverse.

Then, the digital twin is solved again to determine if the new scenario violates any of the constraints defined for the control variables, if no violation of constraints occurs, another more adverse scenario is generated until one of the scenarios involves a violation of at least one constraint. This condition can also be relaxed to the violation of two or more constraints. Once the established condition of constraint violation is met, the previous less adverse scenario is considered as a viable scenario (9, 14) and is consolidated as a viable scenario for the next predetermined period of time. In the case shown in figure 1, the maximum injection power and maximum consumption power are blocked (9, 14) to the previous less adverse scenario, wherein there is not any constraint violation. In case of starting with a very adverse scenario and gradually reducing the adversity, the method will keep the first scenario that manages to keep the constraints within the limits.

The scenario generation algorithm can range from very complex to very simple, it can be homogeneous or relative increase/decrease of power, it can prioritize increases or decreases in customers with bilateral agreements or establish hierarchical levels of priority according to different types of customers or different types of tariffs or even select the performance variation of consumers according to an ordered list of prices and availabilities. Different needs and/or regulations will result in different scenario generators.

Finally, operating contours are dynamically obtained from the multiple viable scenarios collected. This information is published (15) in order to proceed with the adoption of dynamic codes by the flexible devices.

There are multiple ways of making this adoption. One way, for example, could be the periodic publication of these operating limits by the operator so that aggregators in the area of operation subscribe to a channel and then execute the codes on their clients or on the flexible devices in the area in question over which they have control. It should be stressed that a distribution area may contain many aggregators with different device fleets. Another form of adoption would be the direct activation of these codes or operating limits by the distributor on end-consumers. This method would be useful for end-consumers not represented by any aggregator or marketer. However, it must be stressed that the technical methodology of activation depends on the regulation and the case.

Therefore, the operating contours are published and executed by the activation of dynamic codes in the form of flexibility activation. These codes will be updated at regular or irregular time intervals (16) to be defined by the operator.

The method of the invention could also comprise two secondary loops for the validation or modification of the criteria used for determining the viable scenarios.

The first secondary loop evaluates by collecting the control variables whether they are within pre-defined limits (17). If not, it may be indicative of the need to redefine the constraints that control the step of generating a new operating scenario. The method of the invention could include the steps of initiating an alarm (18), updating a constraints violation log and redefining the constraints.

The second of the secondary loops controls whether the active users who have been requested to execute a network code involving the activation of flexibility have actually executed this action (19). Keeping a record of the success rate of flexibility activation requests allows to:
1) take this rate into account when making activation requests; and
2) establish control and penalty measures in the event that activation is not carried out on a recurring basis by certain aggregators, marketers or end consumers.

In this case, the method of the invention could include the steps of initiating an alert (20), updating a grid code violation log and informing the stakeholders.

The method of the invention, as defined, can be executed in real time or with predicted values, to generate dynamic operation codes for the next time interval or to generate dynamic codes with predicted values for periods in the future.

For example, the information collected can be real-time information of forecasted information for tomorrow or for a future time interval.

Also, the generation of digital twins and the generation of scenarios could be configured for prediction.

An example would be a case where we perform for 24-hours-time intervals corresponding each to one hour of the next day, a digital twin and calculate 24 dynamic network codes for the 24 hours of the next day. Using exactly the same method described but using predicted values. In this case, the only change would be that the secondary loops, that verify that the variables are within limits and that the clients met the codes, are verified the next day and not at the time horizons of the codes.

On the other hand, the implementation of the forward prediction system is compatible with real-time corrections, i.e., the two systems could be run at the same time, generating dynamic forward codes that can then be corrected in real-time if the real-time system detects a more restrictive deviation.

Also, the method of the invention could be running continuously, or it may be on stand-by waiting for certain events to occur before it starts running. For example, if bottlenecks are always observed from 17:00 hours to 24:00 hours, we can set the method to start to run in that time interval. When the method runs continuously a periodicity interval could be defined for restarting the definition of the viable scenarios or operating contours.

Also keep in mind that not all parts or partitions of the network have the same problems at the same times, so in one part of the network the method could be on stand-by waiting for the load to exceed a certain value while the load threshold in another part of the network could be different. Or, for example, dynamic real-time operation could be implemented in one part of the network, while another part, for whatever reason, would be operated in a traditional way, for example with a very low penetration of flexible devices.

The specific implementation of the method of the invention in a control system is independent of the functionality itself, i.e., the system could be implemented on a central platform on distributor premises or in cloud and run for the whole network or parts of the network in a centralized way or it could be implemented in a distributed way on edge devices managing specific parts of the network.

In an example of application, the method runs on a central platform as a module that is part of or connected to the ADMS system and controls the area fed by a secondary substation, which may have one or more feeders that are operated in a radial or bladed fashion.

Therefore, the invention is also related to a dynamic operation system for distribution power grids comprising a distributor, connected to the power grid and configured to perform the steps of the method of the invention; a set of flexible devices connected to the distributor; and a plurality of sensors connected to the power grid and the flexible devices.

The method of the invention could be implemented on control servers, thus, constituting an operating system that can be deployed independently or as a module of a more complex operating system.

Preferably, the system could be deployed as a stand-alone software tool or as a module forming part of a distribution company's Advanced Distribution Management Systems (ADMS).

As explained, the characteristics of the method and system of the invention allow the direct connection of flexible devices without the need for existing capacity verification and allow the network to be operated with high penetrations of flexible devices in a way that is compatible with other business models adopted by aggregators, marketers or end-consumers managing flexible devices.

## Claims

1. A method for dynamic operation of distribution power grids comprising a plurality of flexible devices connected, the method comprising the steps of:
- obtaining data (2, 3) from sensors deployed in the flexible devices and the power grid;
- initializing and building (5, 10) digital twins for the flexible devices using the data obtained and applying an operating scenario with low-adverse or high-adverse operating conditions, determining control variables of the digital twins and setting pre-defined constraints;
- solving (6, 11) digital twins;
- determining (7, 12) if a violation of the pre-defined constraints occurs:
○ if the operating scenario applied is a low-adverse operating scenario:
▪ if there is not a violation of the pre-defined constraints:
• generating (8, 13) a new operating scenario more adverse than the previous operating scenario, by modifying at least one of the control variables using a scenario generator module; and
• repeating the steps of solving (6, 11) digital twins and determining (7, 12) if a violation of the pre-defined constraints occurs; or
▪ if there is a violation of at least one of the pre-defined constraints, then, determining (9, 14) that the previous operating scenario is a viable scenario for a next period of time;
○ if the operating scenario applied is a high-adverse operating scenario:
▪ if there is not a violation of at least one of the pre-defined constraints, then, determining that the previous operating scenario is a viable scenario for a next period of time; or
▪ if there is a violation of the pre-defined constraints:
• generating a new operating scenario less adverse than the previous operating scenario, by modifying at least one of the control variables using a scenario generator module; and
• repeating the steps of solving digital twins and determining if a violation of the pre-defined constraints occurs;
- determining a plurality of viable scenarios varying one or more control variables of the digital twins and repeating the steps of solving digital twins and determining if a violation of the pre-defined constraints occurs; and
- applying at least one of the viable scenarios.

2. The method according to claim 1, wherein the method is applied in real-time.

3. The method according to claim 1, wherein the steps of obtaining data (2, 3) from sensors, initializing and building (5, 10) digital twins, solving (6, 11) digital twins, determining (7, 12) if a violation of the pre-defined constraints occurs and determining a plurality of viable scenarios are applied for a future period, using predicted values for initializing and building (5, 10) digital twins, while the step of applying at least one of the viable scenarios is performed in real-time.

4. The method according to any of claims 1 to 3, wherein the step of applying at least one of the viable scenarios is performed by preparing a request for flexibility activation.

5. The method according to any of claims 1 to 4, wherein in the step of obtaining data (2, 3) from sensors deployed in the flexible devices and the power grid the sensors comprises a GIS system, a SCADA system, an inventory system and a telemetering system.

6. The method according to any of claims 1 to 5, wherein in the step of obtaining data (2, 3) from sensors deployed in the flexible devices and the power grid, the sensors comprise smart meters in the grid and sensors at the flexible devices referred as "behind the meter" sensors.

7. The method according to any of claims 1 to 6, wherein in the step of initializing and building (5, 10) digital twins for the flexible devices, the digital twins used are analytical type digital twins, aggregation of variables type digital twins or model-free type digital twins based on artificial intelligence or a combination of the previous methods.

8. The method according to any of claims 1 to 7, wherein the digital twins initialized and built are single-point digital twins or multi-point digital twins.

9. The method according to any of claims 1 to 8, further comprising a step of determining operating contours by aggregating the viable scenarios determined.

10. The method according to any of claims 1 to 9, further comprising a step of publishing (15) the viable scenarios or the operating contours.

11. The method according to any of claims 1 to 10, further comprising a step of executing the viable scenarios or the operating contours by a flexibility activation.

12. The method according to any of claims 1 to 11, further comprising the steps of iteratively evaluating (17) if the control variables are within pre-defined limits, and, if not, redefining constraints that control the scenario generator module in the step of generating a new operating scenario.

13. The method according to any of claims 1 to 12, further comprising a step of iteratively evaluating (19) if the active users have been executed a network code involving the activation of flexibility.

14. The method according to any of claims 1 to 13, wherein the method is set to run continuously or in response to specific events.

15. A dynamic operation system for distribution power grids comprising:
- a distributor, connected to the power grid and configured to perform the steps of the method according to any of claims 1 to 14;
- a set of flexible devices connected to the distribution grid; and
- a plurality of sensors connected to the power grid and the flexible devices.
